# EUROPÄISCHE PATENTSCHRIFT

(11) **EP 1 856 210 B1**
(45) Veröffentlichungstag und Bekanntmachung des Hinweises auf die Patenterteilung: **17.11.2010**
(21) Anmeldenummer: 06707150.6
(22) Anmeldetag: 22.02.2006
(51) Int. Cl.: C09B 67/04, C09B 67/10

(54) **VERFAHREN ZUR HERSTELLUNG TRANSPARENTER DIOXAZINPIGMENTE**
METHOD FOR PRODUCING TRANSPARENT DIOXAZINE PIGMENTS
PROCEDE POUR PRODUIRE DES PIGMENTS DE DIOXAZINE TRANSPARENTS

(30) Priorität: 25.02.2005 DE 102005008659
(43) Veröffentlichungstag der Anmeldung: 21.11.2007
(73) Patentinhaber: Clariant Produkte (Deutschland) GmbH, 65929 Frankfurt am Main (DE)
(72) Erfinder: HECKMANN, Heino, 65835 Liederbach (DE); BÖHMER, Martin, 61267 Neu-Anspach (DE); BRYCHCY, Klaus, 60488 Frankfurt am Main (DE)
(74) Vertreter: Hütter, Klaus
(86) Internationale Anmeldenummer: PCT/EP2006/001583
(87) Internationale Veröffentlichungsnummer: WO 2006/089722

(56) Entgegenhaltungen:
- EP-A1- 0 538 784
- EP-A1- 0 653 244
- EP-A2- 0 321 919
- WO-A-2005/085363
- DE-B1- 2 742 575
- GOCK E ET AL: "NEUESTE ENTWICKLUNGEN VON SCHWINGMUEHLEN AM BEISPIEL DER MAHLUNG VON CARBIDEN UND PIGMENTEN" FORTSCHRITTSBERICHTE DER DEUTSCHEN KERAMISCHEN GESELLSCHAFT, BAUVERL., WIESBADEN, DE, Bd. 16, Nr. 1, 8. Dezember 1999 (1999-12-08), Seiten 51-59, XP009048822 ISSN: 0177-6983 in der Anmeldung erwähnt

## Beschreibung

Die Erfindung betrifft ein neues Verfahren zum Zerkleinern von Dioxazinrohpigmenten, in dem eine Schwingmühle mit exzentrischer Schwingbewegung verwendet wird.

Das Zerkleinern von Dioxazinrohpigmenten wird seit langem durchgeführt und erfordert spezielle Mühlen. Neben Rollmühlen werden Schwingmühlen eingesetzt, die durch kreisförmige, d.h. zentrische Schwingbewegungen charakterisiert sind. Außerdem werden Perlmühlen zur Nassmahlung eingesetzt.

Die bei der Konstruktion einer Mühle wesentlichen Größen sind zum einen der spezifische Energieeintrag, d.h. der Teil der angewandten Energie, der die tatsächliche Zerkleinerungsarbeit bewirkt, und zum anderen die Art und Weise, wie dieser spezifische Energieeintrag zur Anwendung kommt. Der restliche Teil der Energie bewirkt im wesentlichen Erwärmung.

So ist eine Roll- oder Perlmahlung zwar durch einen sehr schonenden Energieübertragungsmechanismus gekennzeichnet, die Zerkleinerungsarbeit wird hauptsächlich in Form von Reibungsenergie übertragen. Nachteil ist jedoch der geringe spezifische Energieeintrag, wodurch lange Mahlzeiten erforderlich werden, um zu einer gewünschten Feinheit zu kommen.

Schwingmühlen haben zwar einen wesentlich höheren spezifischen Energieeintrag, was sich in drastisch kürzeren Mahlzeiten und damit wirtschaftlicheren Verfahren niederschlägt. Die Energie wird aber hauptsächlich durch Stoß übertragen, die Mahlung ist daher bei weitem nicht so schonend wie bei einer Rollmahlung.

Prinzipiell kann eine zu starke mechanische Beanspruchung bei der Mahlung von organischen Pigmenten eine irreversible Zerstörung des Kristallgitters bewirken, was sich in verschlechterten anwendungstechnischen Eigenschaften, wie beispielsweise verringerte Wetterechtheit oder erniedrigte Farbstärke auswirkt. Es existiert daher bei der Mahlung in einer Schwingmühle ein Optimum der anwendungstechnischen Eigenschaften, das möglichst rasch erreicht werden soll.

Die Synthese von Dioxazinpigmenten ist seit langem bekannt. Die bei der Synthese grobkristallin anfallenden Dioxazine, im folgenden Rohpigmente genannt, können ohne Zerkleinerung wegen ihrer ungenügenden anwendungstechnischen Eigenschaften nicht zum Färben von hochmolekularen Materialien verwendet werden.

Die bei der Zerkleinerung von organischen Rohpigmenten in Roll- oder Schwingmühlen entstehenden Präpigmente zeichnen sich durch ein Primärkorn aus, welches die gewünschte oder eine feinere als die gewünschte Teilchengrößenverteilung besitzt: Die Primärkörner sind jedoch so stark aggregiert, dass sie erst durch eine Nachbehandlung aufgeschlossen und ggf. durch Kristallwachstum in die gewünschte Teilchengrößenverteilung überführt werden müssen. Für diese Nachbehandlung sind zahlreiche Verfahren bekannt, beispielsweise eine thermische Nachbehandlung in einem flüssigen wässrigen, organischen oder wässrig-organischen Medium, die als Finish bezeichnet wird, oder beispielsweise eine Desaggregation durch eine Naßdispergierung.

Der Grad der Aggregation ist abhängig vom verwendeten Mahlprinzip. So entstehen bei der Rollmahlung gewöhnlicherweise weniger stark aggregierte Präpigmente als bei einer Schwingmahlung. Die Aggregation durch eine Schwingmahlung kann bei organischen Pigmenten so stark sein, dass sie durch eine Nachbehandlung nicht mehr oder nur noch mit großem Aufwand und damit unwirtschaftlich aufgehoben werden kann.

Die Mahlung beeinflusst daher maßgeblich die anwendungstechnischen Eigenschaften, wie beispielsweise Farbstärke, Farbtonreinheit, Transparenz, Glanz, Lösemittel-, Licht- und Wetterechtheit und Rheologie.

In DE-B1-27 42 575 wird ein Verfahren beansprucht, das eine Schwingmühle zum Zerkleinern von Pigmenten der Dioxazinreihe verwendet.

In Gock, E.; Corell, J., Fortschrittsberichte der Deutschen Keramischen Gesellschaft (2001), 16 (1, Symposium - Neue Entwicklungen in der Keramischen Aufbereitung, 1999), 51-59 wird der Einsatz von Exzenterschwingmühlen zur Herstellung eines deckenden organischen Pigments beschrieben. Dies war nicht überraschend, da aus den oben geschilderten Gründen die Vermutung nahe lag, dass die Mahlung durch eine Exzenterschwingmühle zu noch stärkerer Aggregation der Pigmentteilchen führen würde als auf einer herkömmlichen Schwingmühle. In dieser Schrift wird jedoch nicht offenbart, um welches organische Pigment es sich handelt.

Vor dem Hintergrund der geschilderten Aspekte bestand die Aufgabe, die Effizienz bei der Mahlung von Dioxazinen zu erhöhen, um die oben genannten anwendungstechnischen Eigenschaften in kürzerer Zeit bzw. bessere Eigenschaften in gleicher Zeit zu erhalten, insbesondere um sowohl transparente als auch farbstarke Dioxazinpigmente zu erhalten.

Diese Aufgabe wurde überraschend und entgegen der bisherigen Erfahrung durch den Einsatz einer Exzenterschwingmühle gelöst.

Gegenstand der Erfindung ist ein Verfahren zur Herstellung von transparenten Dioxazinpigmenten, **dadurch gekennzeichnet, dass** zur Zerkleinerung eines Dioxazinrohpigments eine Exzenterschwingmühle mit mindestens einem auf Schwingelementen gelagerten Mahlbehälter und mit einer starr an den Mahlbehälter befestigten Erregereinheit verwendet wird, wobei die Erregung exzentrisch einseitig und außerhalb der Schwerkraftachse und des Massenmittelpunkts des Mahlbehälters erfolgt, so dass inhomogene Schwingungen bestehend aus Kreis-, Ellipsen- und Linearschwingungen erzeugt werden.

Geeignete Mühlenkonstruktionen werden beispielsweise in der EP-A1-0 653 244 beschrieben. Typische Schwingungsweiten betragen bis zu 20 mm, die Motordrehzahl bis zu 2000 Upm. Es gilt hierbei, je höher die Motordrehzahl, desto geringer die Schwingweite. Beispiel: 12 bis 13 mm Amplitude bei 1000 Upm; 5 bis 6 mm Amplitude bei 1500 Upm. Der Mahlrohrdurchmesser kann 200 bis 1000 mm, die Mahlrohrlänge 400 bis 2000 mm betragen. Die spezifische Antriebsarbeit ist abhängig von dem gewünschten Mahleffekt. Sie beträgt für PV 23 typischerweise zwischen 0,2 und 8,0 kWh/kg Pigment, für "Lacktypen" beispielsweise zwischen 1,8 und 2,5 kWh/kg Pigment.

Das eingesetzte Dioxazin kann das direkt nach der Synthese vorliegende Dioxazin-Rohpigment sein, das meist noch bis zu ca. 35 % bei der Synthese entstandener Salze enthält. Gewöhnlicherweise werden diese aus der Synthese stammenden Salze durch einen alkalischen und/oder sauren wässrigen Auszug entfernt. Im erfindungsgemäßen Verfahren kann sowohl das synthesesalzhaltige als auch das vom Synthesesalz gereinigte Rohpigment eingesetzt werden.

Es kann auch eine Mischung aus unterschiedlichen Dioxazinen eingesetzt werden.

Beispiele für Dioxazinpigmente sind C.I. Pigment Violet 23, 37 und C.I. Pigment Blue 80.

Bevorzugt werden C.I. Pigment Violet 23 und C.I. Pigment Blue 80.

Unter transparenten Dioxazinpigmenten werden solche verstanden, die BET-Oberflächen von mehr als 20 m²/g, besonders von mehr als 30 m²/g, insbesondere von mehr als 40 m²/g, und/oder deren elektronenmikroskopisch bestimmte Teilchengrößenverteilungen gekennzeichnet sind durch D50-Werte von kleiner 175 nm, besonders kleiner 150, insbesondere kleiner 100 nm.

Zur Bestimmung des Zerkleinerungsgrades kann als einfache Methode die Farbstärke verwendet werden, sie steigt mit zunehmendem Zerkleinerungsgrad. Des weiteren kann im Röntgenbeugungsspektrum ein geeigneter Peak gewählt werden, dessen absolute Höhe in Relation zur absoluten Höhe des Untergrundes des Spektrums gesetzt wird. Der so erhaltene Quotient dient als Indexzahl für die Kristallinität (Maßzahl für Kristallgröße und Kristallqualität) und somit für den erreichten Mahlgrad des Pigments.

Um eine Mahlung in verschiedenen Mühlen vergleichen zu können, muss bei gleichem Mahlgutfüllgrad gearbeitet werden. Der Mahlgutfüllgrad liegt meist bei 60 bis 100 % und ist definiert als das Verhältnis des Volumens der Mahlgutschüttung zu Beginn der Mahlung (Rohpigment und gegebenenfalls Mahlhilfsmittel) zum freien Volumen der Mahlkörperschüttung (nur die Mahlkörper). Auch der Mahlkörperfüllgrad muss gleich sein, er ist definiert als das Verhältnis der Mahlkörperschüttung zum Mühlenvolumen. In der Regel wird ein Mahlkörperfüllgrad von 50 % bis 80 % gewählt.

Im erfindungsgemäßen Verfahren kann die Exzenterschwingmühle sowohl kontinuierlich als auch diskontinuierlich betrieben werden, der diskontinuierliche Betrieb wird im Labormaßstab bevorzugt. Es können auch mehrere Mühlen parallel oder hintereinander geschaltet sein. Als Mahlkörper kommen alle üblichen in Betracht, beispielsweise Kugeln, Zylinder oder Stangen und als Materialien für die Mahlkörper Stahl, Porzellan, Keramik, wie beispielsweise Steatit, Oxide, wie beispielsweise Aluminiumoxid, gegebenenfalls stabilisiertes Zirkonoxid, Mischoxide, wie beispielsweise Zirkonmischoxide, oder Quarz. Die Mahlkörper sollen eine möglichst glatte und porenfreie Oberfläche haben. Die Mahlung kann bei Temperaturen von -20 bis +200°C, vorzugsweise 0 bis 150°C, stattfinden, gewöhnlicherweise wird jedoch bei einer Temperatur zwischen 20 und 100°C gemahlen. Die Mühle kann auch gekühlt oder geheizt werden. Die Verweilzeit in der Mühle kann beispielsweise zwischen 5 Minuten und 25 Stunden, zweckmäßigerweise zwischen 15 Minuten und 15 Stunden, vorzugsweise zwischen 30 Minuten und 9 Stunden, betragen.

Für die Innenauskleidung der Mühle kommen verschleißfeste Panzerungen aus Stahl, Elastomer oder Keramik in Betracht.

Die Mahlung erfolgt mit oder ohne Mahlhilfsmittel. Als Mahlhilfsmittel kommen Alkalimetall- oder Erdalkalimetallsalze von anorganischen Säuren, beispielsweise Salzsäure oder Schwefelsäure, oder von organischen Säuren mit 1 bis 4 Kohlenstoffatomen, beispielsweise Ameisensäure und Essigsäure, in Frage. Bevorzugte Salze sind Natriumformiat, Natriumacetat, Calciumacetat, Natriumchlorid, Kaliumchlorid, Calciumchlorid, Natriumsulfat, Aluminiumsulfat oder Mischungen dieser Salze. Die Mahlhilfsmittel können in beliebiger Menge eingesetzt werden, beispielsweise in bis zur 5-fachen Menge, bezogen auf das Gewicht des Rohpigments. Auch größere Mengen können eingesetzt werden, sind jedoch unwirtschaftlich.

Bei der Mahlung können organische Flüssigkeiten und Lösemittel zum Einsatz kommen. Beispiele für solche Flüssigkeiten und Lösemittel sind Alkohole mit 1 bis 10 C-Atomen, wie beispielsweise Methanol, Ethanol, n-Propanol, Isopropanol, Butanole, wie n-Butanol, iso-Butanol, tert.-Butanol, Pentanole, wie n-Pentanol; 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Di-, Tri- oder Tetraethylenglykol, Propylenglykol, Di-, Tri- oder Tetrapröpylenglykol, Sorbitol oder Glycerin; Polyglykole, wie Polyethylen- oder Polypropylenglykole; Ether, wie Methylisobutylether, Tetrahydrofuran, Dimethoxyethan oder Dioxan; Glykolether, wie Monoalkylether des Ethylen- oder Propylenglykols oder Diethylenglykolmonoalkylether, wobei Alkyl für Methyl, Ethyl, Propyl, und Butyl stehen kann, beispielsweise Butylglykole oder Methoxybutanol; Polyethylenglykolmonomethylether, insbesondere solche mit einer mittleren molaren Masse von 350 bis 550 g/mol, und Polyethylenglykoldimethylether, insbesondere solche mit einer mittleren molaren Masse von 250 bis 500 g/mol; Ketone, wie Aceton, Diethylketon, Methylisobutylketon, Methylethylketon oder Cyclohexanon; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C₁-C₆-alkylester, wie Ameisensäurebutylester, Essigsäureethylester oder Propionsäurepropylester; oder Carbonsäure-C₁-C₆-glykolester; oder Glykoletheracetate, wie 1-Methoxy-2-propylacetat; oder Phthalsäuredi- oder Benzoesäurealkylester, wie Benzoesäure-C₁-C₄-alkylester oder C₁-C₁₂-Alkylphthalsäurediester; cyclische Ester, wie Caprolacton; Nitrile, wie Acetonitril, aliphatische oder aromatische Amine, wie beispielsweise n-Butylamin, Dimethylanilin oder Diethylanilin; gegebenenfalls halogenierte aliphatische Kohlenwasserstoffe wie Cyclohexan, Methylcyclohexan, Methylenchlorid, Tetrachlorkohlenstoff, Di-, Tri- oder Tetrachlorethylen, Di- oder Tetrachlorethane; oder aromatische Kohlenwasserstoffe oder Gemische aus aromatischen und aliphatischen Kohlenwasserstoffen wie Benzol, Benzine oder Pinen; oder durch Alkyl, Alkoxy, Nitro, Cyano, Carboxy oder Halogen substituierte aromatische Kohlenwasserstoffe wie beispielsweise Toluol, Xylole, Ethylbenzol, Anisol, Nitrobenzol, Chlorbenzol, Dichlorbenzole, Trichlorbenzole, Benzonitril, Benzoesäure oder Brombenzol; oder andere substituierte Aromaten, wie Phenole, Aminophenole, Kresole, Nitrophenole, Phenoxyethanol oder 2-Phenylethanol; aromatische Heterocyclen, wie Pyridin, Morpholin, Picolin oder Chinolin; 1,3-Dimetyl-2-imidazolidinon; Sulfone und Sulfoxide, wie Dimethylsulfoxid und Sulfolan; sowie Mischungen dieser organischen Flüssigkeiten. Bevorzugt werden solche eingesetzt, die kristallisierende und/oder Phasen-bestimmende Eigenschaften haben. Bevorzugt werden Glykole und Glykolether, wie Ethylenglykol, Diethylenglykol oder Butylglykol, Amine, wie beispielsweise Anilin, Diethylanilin, Dimethylanilin, n-Butylamin, o-Toluidin oder Talgfettpropylendiamin, Dimethylformamid, N-Methylpyrrolidon, Triethanolamin, Toluol, Xylol, Cumen, Mesitylen, Düsopropylnaphthalin oder Octylbenzol verwendet.

Bei der Mahlung können des weiteren auch Säuren zum Einsatz kommen. Es können die aus der Literatur bekannten Säuren eingesetzt werden. Bevorzugt wird Phosphorsäure, Ameisensäure, Essigsäure, Methansulfonsäure, Dodecylbenzolsulfonsäure und insbesondere Schwefelsäure eingesetzt.

Pulverförmige Feststoffe können eine gewisse Menge Flüssigkeit aufnehmen, ohne ihre rieselfähige Konsistenz zu verlieren. Werden organische Flüssigkeiten und/oder Säure eingesetzt, dann in solchen Mengen, dass das Mahlgut eine trockene, d.h. schüttbare bzw. rieselfähige Konsistenz behält. Größere Mengen führen zu einem Anbacken und Zementieren des Mahlguts an den Mahlkörpern und an der Wandung der Mühle. Die möglichen Höchstmengen an organischer Flüssigkeit und/oder Säure können stark schwanken und hängen von der Zusammensetzung des Mahlguts und von der entstehenden Feinheit und damit von der Oberfläche der Kristallite während der Mahlung ab. Gewöhnlicherweise liegen die Mengen bei 0 bis 15 Gew.-%, vorzugsweise 1 bis 10 Gew.-% bezogen auf Rohpigment.

Wenn Mahlhilfsmittel, organische Flüssigkeiten oder Säuren bei der Mahlung eingesetzt wurden, können diese vor einer Nachbehandlung entfernt werden. Dies empfiehlt sich besonders bei Einsatz größerer Mengen dieser Zusatzstoffe. Dazu wird das Mahlgut mit Wasser zu einer wässrigen Suspension angerührt, die Zusatzstoffe gelöst und durch Filtration vom Präpigment getrennt. Bewährt hat sich bei dieser Behandlung das Einstellen eines sauren pH durch Zugabe von Säure, beispielsweise Salzsäure oder Schwefelsäure. Es kann auch ein alkalischer pH gewählt werden, z.B. um eine eingesetzte Säure zu lösen. Es kann auf eine Entfernung auch verzichtet werden, besonders bei Einsatz geringer Mengen Mahlhilfsmittel, organischer Flüssigkeiten oder Säuren. Diese können beispielsweise auch durch das bei einem Finish eingesetzte Wasser gelöst werden bzw. durch eine entsprechende Menge Base neutralisiert werden.

Bei der Mahlung nach dem erfindungsgemäßen Verfahren können weitere Hilfsmittel eingesetzt werden, wie beispielsweise Tenside, nichtpigmentäre und pigmentäre Dispergiermittel, Füllstoffe, Stellmittel, Harze, Wachse, Entschäumer, Antistatika, Antistaubmittel, Extender, Farbmittel zum Nuancieren, Konservierungsmittel, Trocknungsverzögerungsmittel, Additive zur Steuerung der Rheologie, Netzmittel, Antioxidantien, Reduktionsmittel, UV-Absorber, Lichtstabilisatoren, oder eine Kombination davon.

Es können also nach dem erfindungsgemäßen Verfahren sowohl Dioxazinpigmente als auch Dioxazinpigmentzubereitungen hergestellt werden.

Als Tenside kommen anionische oder anionaktive, kationische oder kationaktive und nichtionische oder amphotere Substanzen oder Mischungen dieser Mittel in Betracht, wie z.B. in WO-2004/052997 und WO-2004/052996 aufgeführt.

Mit nichtpigmentären Dispergiermitteln sind Substanzen gemeint, die strukturell nicht von organischen Pigmenten abgeleitet sind, wie z.B. in WO-2004/052997 und WO-2004/052996 aufgezählt. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben.

Mit pigmentären Dispergiermitteln sind an sich bekannte Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäure-, Sulfonamid- oder sulfosäureestergruppenhaltige Pigmentdispergatoren, Ether- oder thioethergruppenhaltige Pigmentdispergatoren, oder Carbonsäure-, Carbonsäureester- oder carbonamidgruppenhaltige Pigmentdispergatoren. Beispiele solcher Dispergatoren sind in der EP-A-0 321 919, der EP-A-0 489 421 oder EP-A-0 538 784 beschrieben. Bevorzugt werden solche Pigmentdispergatoren eingesetzt, die sich strukturell von P.V.23 als Grundkörper ableiten, davon besonders bevorzugt sind Pigmentdispergatoren, die über eine Methylengruppe mit dem Pigmentgrundkörper verknüpft sind.

Im erfindungsgemäßen Verfahren können ein oder mehrere Pigmentdispergatoren in einer Gesamtmenge von 0,1 bis 25 Gew.-%, vorzugsweise 0,5 bis 20 Gew.-%, insbesondere 1,0 bis 17,5 Gew.-% bezogen auf das Gewicht des Rohpigments eingesetzt werden.

Mit Füllstoffen bzw. Extendern sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid.

Nach der Mahlung liegen die Dioxazine häufig als Präpigmente vor, deren anwendungstechnischen Eigenschaften noch nicht den Anforderungen genügen. Daher schließt sich einer Mahlung häufig eine Nachbehandlung an, die beispielsweise eine Behandlung in einem flüssigen wässrigen, wässrig-organischen oder organischen Medium, gegebenenfalls bei erhöhter Temperatur, im folgenden Finish genannt, oder auch eine Naßdispergierung sein kann. Für die Nachbehandlung können die Präpigmente direkt in trockener Form oder, nach Entfernung der Mahlhilfsmittel, getrocknet oder als Presskuchen eingesetzt werden.

Im Falle eines Finishs wird das gemahlene Dioxazin einer Behandlung in einem wässrigen, wässrig-organischen oder rein organischen, einphasigen, mehrphasigen oder emulsionsartigen Lösemittelsystem unterzogen. Meist werden erhöhte Temperaturen bis 200°C gewählt, gegebenenfalls wird unter Druck gearbeitet. Die Behandlung kann zwischen 5 Minuten und 24 Stunden dauern, längere Zeiten sind natürlich möglich aber meist unwirtschaftlich.

Beim Finish oder auch schon während der Mahlung können anionische Gruppen der als Hilfsmittel eingesetzten nichtpigmentären oder pigmentären Dispergatoren, Tenside oder Harze auch verlackt werden, beispielsweise durch Ca-, Mg-, Ba-, Sr-, Mn- oder Al-lonen oder durch quarternäre Ammoniumionen, oder sie werden bereits verlackt eingesetzt.

Die zur Nachbehandlung durchgeführte Naßdispergierung kann in den üblichen diskontinuierlichen oder kontinuierlichen Roll- oder Perlmühlen geschehen, auch Rührwerkskugelmühlen hoher Energiedichte können zum Einsatz kommen. Als Mahlkörper dienen Kugeln, die Mahlung kann in wässrigen, wässrig-organischen oder rein organischen, einphasigen, mehrphasigen oder emulsionsartigen Lösemittelsystemen durchgeführt werden. Hier können Säuren oder Basen zum Einsatz kommen, wobei Basen bevorzugt werden. Die Pigmentkonzentration im Mahlgut ist abhängig von der Rheologie der Suspension und vom gewählten Mühlentyp und beträgt zweckmäßigerweise höchstens 40 Gew.-% der Mahlgutsuspension. Meist werden Temperaturen von 0 bis 100°C gewählt. Die Dispergierdauer hängt von den gewünschten Anforderungen ab.

Als organische Flüssigkeiten, die bei der Nachbehandlung eingesetzt werden können, kommen die oben bei der Mahlung aufgezählten organischen Flüssigkeiten und Mischungen daraus in Betracht. Bevorzugt werden solche eingesetzt, die kristallisierende und/oder phasenbestimmende Eigenschaften haben. Bevorzugte Lösemittel sind C₁-C₆-Alkohole, insbesondere Methanol, Ethanol, n- und Isopropanol, Isobutanol, n- und tert.-Butanol und tert.-Amylalkohol; C₃-C₆-Ketone, insbesondere Aceton, Methylethylketon oder Diethylketon; Tetrahydrofuran, Dioxan, Glykole und Glykolether, wie beispielsweise Ethylenglykol, Diethylenglykol oder Ethylenglykol-C₃-C₅-alkylether, insbesondere 2-Methoxyethanol, 2-Ethoxyethanol, Butylglykol, n-Butylamin, Dimethylformamid, Dimethylacetamid, N-Methylpyrrolidon, Benzoesäure-C₁-C₄-alkylester, Toluol, Xylol, Ethylbenzol, Chlorbenzol, o-Dichlorbenzol, Trichlorbenzole, Nitrobenzol, Phenol, Nitrophenole, Pyridin, Chinolin, Dimethylsulfoxid, Cyclohexan oder Methylcyclohexan.

Im Falle einer Nachbehandlung kann unter Umständen, insbesondere bei Einsatz nur geringer Mengen an Mahlhilfsmitteln, organischer Flüssigkeiten oder Säuren bei der Mahlung, auf die Entfernung dieser Stoffe vor einer Nachbehandlung verzichtet werden. Dann wird das Mahlgut direkt der Nachbehandlung unterzogen und zum Entfernen der Mahlhilfsmittel, organischer Flüssigkeiten oder Säuren das bei der Nachbehandlung eingesetzte Lösemittelsystem verwendet.

Bei Lösemitteln, die durch Wasserdampfdestillation von einer wässrigen Phase getrennt werden können, bietet es sich an, diese auf diese Weise vor Isolation zu entfernen, besonders wenn eine Wiedergewinnung des eingesetzten Lösemittels gewünscht ist.

Andere Lösemittel, insbesondere Ester, können nach der Nachbehandlung durch Verseifen zerstört und so leichter entfernt werden.

Bei entsprechenden anwendungstechnischen Anforderungen ist es möglich, dass bereits nach der Mahlung die Dioxazinpigmente oder -präpigmente in der gewünschten Form vorliegen, so dass sie keiner weiteren Behandlung mehr bedürfen und direkt nach der Mahlung eingesetzt werden können, oder sie bedürfen lediglich der oben geschilderten Entfernung eingesetzter Mahlhilfsmittel. Dies bietet sich insbesondere im Falle des Einsatzes der Dioxazinpigmente in Druckfarbensystemen an, da hier bei der Einarbeitung des Farbmittels in das Druckfarbensystem oder in das Bindemittel des Druckfarbensystems oft noch eine einem Finish ähnliche Nachbehandlung und gegebenenfalls auch ein gewünschter Kristallmodifikationswechsel stattfinden kann.

Die nach dem erfindungsgemäßen Verfahren hergestellten Mahlgüter haben eine trockene, d.h. schüttbare, rieselfähige Konsistenz; die Präpigmente, Pigmente oder Pigmentzubereitungen liegen nach dem Entfernen der Mahlhilfsmittel oder nach der Nachbehandlung in Form einer Suspension vor und können nach den üblichen Methoden isoliert werden, beispielsweise durch Filtrieren, Dekantieren oder Zentrifugieren. Lösemittel können auch durch Waschen entfernt werden. Die Präpigmente, Pigmente und Pigmentzubereitungen können als vorzugsweise wässrige Presskuchen zum Einsatz kommen, in der Regel handelt es sich jedoch um getrocknete, feste Systeme von rieselfähiger, pulverförmiger Beschaffenheit oder um Granulate.

Die Hilfsmittel können auch erst nach der Mahlung bei einem beliebigen Schritt der Nachbehandlung oder Isolation zugegeben werden.

Die nach dem erfindungsgemäßen Verfahren hergestellten Pigmente und Pigmentzubereitungen lassen sich zum Pigmentieren von hochmolekularen organischen Materialien natürlicher oder synthetischer Herkunft einsetzen, beispielsweise von Kunststoffen, Harzen, Lacken, Anstrichfarben, elektrophotographischen Tonern und Entwicklern, Elektretmaterialien, Farbfiltern sowie von Tinten, Druckfarben und Saatgut.

Es war überraschend und nicht vorherzusehen, dass es durch den Einsatz einer mit dem exzentrischen Schwingprinzip arbeitenden Schwingmühle entgegen der Lehre von Gock, E. und Corell, J. möglich ist, Dioxazine in einer im Vergleich zu herkömmlichen Schwingmühlen wirtschaftlicheren Weise zu zerkleinern, aber dennoch Dioxazinpigmente mit hoher Transparenz herzustellen. Überraschend und nicht vorherzusehen war auch, dass die nach dem erfindungsgemäßen Verfahren hergestellten Dioxazinpigmente zudem auch hohen Glanz, Farbstärke, Dispergierbarkeit, Farbtonreinheit und gute Rheologie besitzen. Auch war es überraschend, dass mit höheren Mengen an organischem Lösemittel gemahlen werden kann als in einer konventionellen, d.h. mit dem zentrischen Schwingprinzip arbeitenden Schwingmühle, ohne dass es zu Verbackungen des Mahlguts kommt. Durch die Verwendung des exzentrischen Mahlprinzips wird der Einsatzbereich der Schwingmahlung also deutlich erweitert.

Die BET-Oberfläche wird nach DIN 66132 bestimmt.

Die Teilchengrößenverteilung wird mittels Elektronenmikroskopie bestimmt, 50 Vol.-% der Teilchen haben einen gleichen oder kleineren mittleren Durchmesser als der so genannte D50-Wert. Der D50-Wert wird durch manuelle Auswertung auf dem graphischen Tablett bestimmt. Dabei werden die Primärteilchen erfasst.

Zur Beurteilung der Eigenschaften der Pigmentzubereitungen auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes ausgewählt.

Die Bestimmung der coloristischen Eigenschaften erfolgte nach DIN 55986. Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

In den folgenden Beispielen bedeuten Prozentangaben Gewichtsprozente und Teile Gewichtsteile, sofern nicht anders angegeben.

### Beispiel 1a

Eine nach dem exzentrischen Schwingprinzip gemäß der EP-A1-0 653 244 arbeitende Schwingmühle wird mit Eisenstangen als Mahlkörper bestückt. Der Mahlkörperfüllgrad beträgt 65 %. Das Mahlgut besteht aus synthesesalzhaltigem Dioxazinrohpigment P.V.23, Natriumchlorid und Diethylenglycol im Gewichtsverhältnis 4 zu 6 zu 1. Der Mahlgutfüllgrad beträgt 80 %. Es wird 90 Minuten gemahlen.

### Beispiel 1 b

Zum Entsalzen wird das Mahlgut aus Beispiel 1a in der 4-fachen Menge Wasser eine Stunde bei 60°C gerührt, die Suspension wird abgesaugt und der Presskuchen salzfrei gewaschen. Der wässrige Presskuchen hat einen Trockengehalt von 41,3 Gew.-%.

### Beispiel 1 c

222,6 Teile wässriger Presskuchen 41,3 gew.-%ig, hergestellt gemäß Beispiet 1b, werden in 139 Teilen tert.-Amylalkohol, 191,0 Teilen Wasser und 0,92 Teilen eines Natriumsalzes eines Olefinsulfonates angerührt und einige Zeit bei Raumtemperatur homogenisiert. Anschließend wird die Mischung 5 Stunden bei Siedetemperatur gerührt. Dann wird der tert.-Amylalkohol abdestilliert, mit 95 Teilen Wasser verdünnt, die Suspension abgesaugt, der Presskuchen neutral gewaschen und getrocknet. Man erhält 93,2 Teile Dioxazinpigmentzubereitung. Die BET-Oberfläche beträgt 71 m²/g.

### Vergleichsbeispiel 2A/B

Die Versuchsbedingungen von Beispiel 1 a werden auf eine Schwingmühle angewendet, die nach dem konventionellen, zentrischen Schwingprinzip arbeitet. Das Mahlgut wird nach den Bedingungen von Beispiel 1 b entsalzt. Der wässrige Presskuchen hat einen Trockengehalt von 45,8 Gew.-%.

### Vergleichsbeispiel 2C

Mit Presskuchen, der gemäß hergestellt Vergleichsbeispiel 4A/B hergestellt wurde, wird gemäß Beispiel 1c eine Nachbehandlung durchgeführt.

### Vergleich von Beispiel 1c mit Vergleichsbeispiel 2C

Die Pigmentzubereitung, die nach dem Beispiel 1 c unter Einsatz des exzentrischen Schwingmahlprinzips hergestellt wurde, zeigt im AM-Lack hohe Farbstärke, Transparenz, Glanz und niedrige Viskosität.

| | |
|---|---|
| Beispiel 1c exzentrisches Mahlprinzip | Vergleichsbeispiel 2C konventionelles Mahlprinzip |
| merklich höhere Farbstärke als Vergleichsbeispiel 2C | merklich niedrigere Farbstärke als Beispiel 1c |
| etwas transparenter als Vergleichsbeispiel 2C | etwas deckender als Beispiel 1c |
| Glanz-Wert 83 | Glanz-Wert 75 |
| Viskosität 6,8 sec | Viskosität 8,8 sec |
| BET-Oberfläche: 70,9 m²/g | BET-Oberfläche: 68,1 m²/g |

### Beispiel 3a

Eine nach dem exzentrischen Schwingprinzip gemäß der EP-A1-0 653 244 arbeitende Schwingmühle wird mit Eisenstangen als Mahlkörper bestückt. Der Mahlkörperfüllgrad beträgt 65 %. Das Mahlgut besteht aus synthesesalzhaltigem Dioxazinrohpigment P.V.23 und Natriumchlorid im Gewichtsverhältnis 1 zu 2. Der Mahlgutfüllgrad beträgt 90 %. Es wird 120 Minuten gemahlen. Die Mahlgutausbeute beträgt 98,3 Gew.-% des eingesetzten Mahlguts. Der geringe Verlust kommt durch Staubentwicklung beim Befüllen und Entleeren.

### Beispiel 3b

Zum Entsalzen wird das Mahlgut aus Beispiel 3a in der 4-fachen Menge Wasser eine Stunde bei 60°C gerührt, die Suspension wird abgesaugt und der Presskuchen salzfrei gewaschen. Der wässrige Presskuchen hat einen Trockengehalt von 35,0 Gew.-%.

### Beispiel 3c

261,4 Teile wässriger Presskuchen 35,0 gew.-%ig, hergestellt gemäß Beispiel 3b, werden in 139 Teilen tert.-Amylalkohol, 152,2 Teilen Wasser und 0,92 Teilen eines Natriumsalzes eines Olefinsulfonates angerührt und einige Zeit bei Raumtemperatur homogenisiert. Anschließend wird die Mischung 5 Stunden bei Siedetemperatur gerührt. Dann wird der tert.-Amylalkohol abdestilliert, mit 95 Teilen Wasser verdünnt, die Suspension abgesaugt, der Presskuchen neutral gewaschen und getrocknet. Man erhält 89,9 Teile Dioxazin-Pigmentzubereitung. Die BET-Oberfläche beträgt 30 m²/g.

### Vergleichsbeispiel 4A/B

Die Versuchsbedingungen von Beispiel 3a werden auf eine Schwingmühle angewendet, die nach dem konventionellen, zentrischen Schwingprinzip arbeitet. Die Mahlgutausbeute ist drastisch erniedrigt und beträgt lediglich 87,2 Gew.-% des eingesetzten Mahlguts. Der Verlust kommt durch Anbacken des Mahlguts an den Eisenstangen und an der Wandung, das Mahlgut ist so fest zementiert, dass es zur Reinigung der Mühle abgemeißelt werden muss.

Das Mahlgut wird nach den Bedingungen von Beispiel 3b entsalzt. Der wässrige Presskuchen hat einen Trockengehalt von 36,1 Gew.-%.

### Vergleichsbeispiel 4C

Mit Presskuchen, der gemäß hergestellt Vergleichsbeispiel 4A/B hergestellt wurde, wird gemäß Beispiel 3c eine Nachbehandlung durchgeführt.

### Vergleich von Beispiel 3c mit Vergleichsbeispiel 4C

Die Pigmentzubereitung, die nach dem Beispiel 3c unter Einsatz des exzentrischen Schwingmahlprinzips hergestellt wurde, zeigt im AM-Lack hohe Farbstärke, Transparenz, Glanz, niedrige Viskosität und höhere BET-Oberfläche.

| | |
|---|---|
| Beispiel 3c exzentrisches Mahlprinzip | Vergleichsbeispiel 4C konventionelles Mahlprinzip |
| merklich höhere Farbstärke verglichen mit Vergleichsbeispiel 4C | merklich niedrigere Farbstärke verglichen mit Beispiel 3c |
| etwas transparenter als Vergleichsbeispiel 4C | etwas deckender als Beispiel 3c |
| Glanz-Wert 84 | Glanz-Wert 71 |
| Viskosität 21,8 sec | Viskosität 29,5 sec |
| BET-Oberfläche: 29,8 m²/g | BET-Oberfläche: 24,9 m²/g |

### Beispiel 5a

Eine nach dem exzentrischen Schwingprinzip gemäß der EP-A1-0 653 244 arbeitende Schwingmühle wird mit Eisenstangen als Mahlkörper bestückt. Der Mahlkörperfüllgrad beträgt 65 %. Das Mahlgut besteht aus synthesesalzhaltigem Dioxazinrohpigment P.V.23, Natriumchlorid und Diethylenglykol im Gewichtsverhältnis 8 zu 12 zu 1. Der Mahlgutfüllgrad beträgt 80 %. Es wird 90 Minuten gemahlen.

### Beispiel 5b

Zum Entsalzen wird das Mahlgut aus Beispiel 5a in der 4-fachen Menge Wasser eine Stunde bei 60°C gerührt, die Suspension wird abgesaugt und der Presskuchen salzfrei gewaschen. Der wässrige Presskuchen hat einen Trockengehalt von 34,3 Gew.-%.

### Beispiel 5c

266,8 Teile wässriger Presskuchen 34,3 gew.-%ig, hergestellt gemäß Beispiel 5b, werden in 139 Teilen tert.-Amylalkohol, 146,8 Teilen Wasser und 0,92 Teilen eines Natriumsalzes eines Olefinsulfonates angerührt und einige Zeit bei Raumtemperatur homogenisiert. Anschließend wird die Mischung 5 Stunden bei Siedetemperatur gerührt. Dann wird der tert.-Amylalkohol abdestilliert, mit 95 Teilen Wasser verdünnt, die Suspension abgesaugt, der Presskuchen neutral gewaschen und getrocknet. Man erhält 90,9 Teile Dioxazinpigmentzubereitung. Die BET-Oberfläche beträgt 25 m²/g.

### Vergleichsbeispiel 6A/B

Die Versuchsbedingungen von Beispiel 5a werden auf eine Schwingmühle angewendet, die nach dem konventionellen, zentrischen Schwingprinzip arbeitet. Die Mahlgutausbeute beträgt 91 %. Der Verlust kommt durch Anbacken des Mahlguts an den Eisenstangen und an der Wandung, zur Reinigung der Mühle muss das Mahlgut mit relativ hohem Kraftaufwand abgekratzt werden. Das Mahlgut wird nach den Bedingungen von Beispiel 5b entsalzt. Der wässrige Presskuchen hat einen Trockengehalt von 41,6 Gew.-%.

### Vergleichsbeispiel 6C

Mit Presskuchen, der gemäß hergestellt Vergleichsbeispiel 6A/B hergestellt wurde, wird gemäß Beispiel 5c eine Nachbehandlung durchgeführt.

### Vergleich von Beispiel 5c mit Vergleichsbeispiel 6C

Die Pigmentzubereitung, die nach dem Beispiel 5c unter Einsatz des exzentrischen Schwingmahlprinzips hergestellt wurde, zeigt im AM-Lack hohe Farbstärke, Transparenz, Glanz und niedrige Viskosität.

| | |
|---|---|
| Beispiel 5c exzentrisches Mahlprinzip | Vergleichsbeispiel 6C konventionelles Mahlprinzip |
| deutlich höhere Farbstärke als Vergleichsbeispiel 6C | deutlich niedrigere Farbstärke als Beispiel 5c |
| merklich transparenter als Vergleichsbeispiel 6C | merklich deckender als Beispiel 5c |
| Glanz-Wert 84 | Glanz-Wert 56 |
| Viskosität 8,2 sec | Viskosität 8,4 sec |

### Beispiel 7

Eine nach dem exzentrischen Schwingprinzip gemäß der EP-A1-0 653 244 arbeitende Schwingmühle wird mit Eisenstangen als Mahlkörper bestückt. Der Mahlkörperfüllgrad beträgt 65 %. Das Mahlgut besteht aus synthesesalzhaltigem Dioxazinrohpigment P.V.23, Natriumchlorid und Diisopropylnaphthalin im Gewichtsverhältnis 10 zu 4 zu 1. Der Mahlgutfüllgrad beträgt 70 %. Es wird 2 Stunden gemahlen. Die Mahlgutausbeute ist 98,3 %. Der geringe Verlust kommt durch den Befüll- und Entleervorgang.

Zum Entsalzen wird das Mahlgut in der 4-fachen Menge Wasser eine Stunden bei 60°C gerührt, die Suspension wird abgesaugt und der Presskuchen salzfrei gewaschen.

Der Presskuchen wird analog Beispiel 3c einer Nachbehandlung unterzogen.

### Vergleichsbeispiel 8

Beispiel 7 wird durchgeführt mit dem einzigen Unterschied, dass eine nach dem konventionellen Schwingprinzip arbeitende Schwingmühle an Stelle der exzentrischen eingesetzt wird. Die Mahlgutausbeute liegt unter 86,1 % durch Anbackungen.

### Vergleich von Beispiel 7 mit Vergleichsbeispiel 8:

Die Pigmentzubereitung aus Beispiel 7 liefert im AM-Lack farbstarke und transparente Färbungen mit hohem Glanz und guten Fließeigenschaften.

| | |
|---|---|
| Beispiel 7 exzentrisches Mahlprinzip | Vergleichsbeispiel 8 konventionelles Mahlprinzip |
| etwas höhere Farbstärke verglichen mit Vergleichsbeispiel 8 | etwas niedrigere Farbstärke verglichen mit Beispiel 7 |
| etwas transparenter als Vergleichsbeispiel 8 | etwas deckender als Beispiel 7 |
| Glanz-Wert 80 | Glanz-Wert 63 |
| Viskosität 6,3 sec | Viskosität 8,3 sec |

## Patentansprüche

1. Verfahren zur Herstellung von transparenten Dioxazinpigmenten, **dadurch gekennzeichnet, dass** zur Zerkleinerung eines Dioxazinrohpigments eine Exzenterschwingmühle mit mindestens einem auf Schwingelementen gelagerten Mahlbehälter und mit einer starr an den Mahlbehälter befestigten Erregereinheit verwendet wird, wobei die Erregung exzentrisch einseitig und außerhalb der Schwerkraftachse und des Massenmittelpunkts des Mahlbehälters erfolgt, so dass inhomogene Schwingungen bestehend aus Kreis-, Ellipsen- und Linearschwingungen erzeugt werden.

2. Verfahren nach Anspruch 1, **dadurch gekennzeichnet, dass** das Dioxazinpigment C.I. Pigment Violet 23, C.I. Pigment Violet 37 oder C.I. Pigment Blue 80 ist.

3. Verfahren nach Anspruch 1 oder 2, **dadurch gekennzeichnet, dass** die Zerkleinerung bei einer Temperatur zwischen 0 und 150°C durchgeführt wird.

4. Verfahren nach mindestens einem der Ansprüche 1 bis 3, **dadurch gekennzeichnet, dass** die Zerkleinerung in Gegenwart von Alkali- oder Erdalkalimetallsalzen durchgeführt wird.

5. Verfahren nach mindestens einem der Ansprüche 1 bis 4, **dadurch gekennzeichnet, dass** die Zerkleinerung in Gegenwart von 0 bis 15 Gew.-%, bezogen auf das Rohpigment, von organischem Lösemittel durchgeführt wird.

6. Verfahren nach mindestens einem der Ansprüche 1 bis 5, **dadurch gekennzeichnet, dass** die Zerkleinerung in Gegenwart von Hilfsmitteln aus der Gruppe der Tenside, Dispergiermittel, Füllstoffe, Stellmittel, Harze, Wachse, Entschäumer, Antistatika, Antistaubmittel, Extender, Farbmittel zum Nuancieren, Konservierungsmittel, Trocknungsverzögerungsmittel, Additive zur Steuerung der Rheologie, Netzmittel, Antioxidantien, Reduktionsmittel, UV-Absorber, Lichtstabilisatoren, oder einer Kombination davon, durchgeführt wird.

7. Verfahren nach mindestens einem der Ansprüche 1 bis 8, **dadurch gekennzeichnet, dass** im Anschluss an die Zerkleinerung ein Lösemittelfinish durchgeführt wird.

## Claims

1. A method for producing transparent dioxazine pigments, which comprises comminuting a crude dioxazine pigment using an eccentric vibration mill having at least one milling container mounted on vibratory elements and having an energizer unit fastened rigidly to the milling container, the energizing taking place eccentrically to one side and outside the gravitational axis and the center of gravity of the milling container, so that inhomogeneous vibrations consisting of circular, elliptical, and linear vibrations are generated.

2. The method as claimed in claim 1, wherein the dioxazine pigment is C.I. Pigment Violet 23, C.I. Pigment Violet 37 or C.I. Pigment Blue 80.

3. The method as claimed in claim 1 or 2, wherein said comminuting is carried out at a temperature between 0 and 150°C.

4. The method as claimed in at least one of claims 1 to 3, wherein said comminuting is carried out in the presence of alkali metal salts or alkaline earth metal salts.

5. The method as claimed in at least one of claims 1 to 4, wherein said comminuting is carried out in the presence of 0% to 15% by weight, based on the crude pigment, of organic solvent.

6. The method as claimed in at least one of claims 1 to 5, wherein said comminuting is carried out in the presence of auxiliaries from the group of surfactants, dispersants, fillers, standardizers, resins, waxes, defoamers, antistats, antidust agents, extenders, shading colorants, preservatives, drying retardants, rheology control additives, wetting agents, antioxidants, reductants, UV absorbers, light stabilizers, or a combination thereof.

7. The method as claimed in at least one of claims 1 to 6, wherein following said comminuting a solvent finish is carried out.

## Revendications

1. Procédé pour la préparation de pigments dioxazine transparents, **caractérisé en ce qu'**on utilise, pour le broyage d'un pigment brut de dioxazine, un broyeur oscillant excentrique présentant au moins un récipient de broyage logé sur des éléments oscillants et une unité d'excitation fixée de manière rigide sur le récipient de broyage, l'excitation étant réalisée excentriquement d'un côté et en dehors de l'axe de la gravité et du centre de gravité du récipient de broyage, de manière telle que des oscillations inhomogènes constituées par des oscillations circulaires, elliptiques et linéaires sont produites.

2. Procédé selon la revendication 1, **caractérisé en ce que** le pigment dioxazine est le C.I. Pigment Violet 23, le C.I. Pigment Violet 37 ou le C.I. Pigment Blue 80.

3. Procédé selon la revendication 1 ou 2, **caractérisé en ce que** le broyage est réalisé à une température entre 0 et 150°C.

4. Procédé selon au moins l'une quelconque des revendications 1 à 3, **caractérisé en ce que** le broyage est réalisé en présence de sels de métal alcalin ou alcalino-terreux.

5. Procédé selon au moins l'une quelconque des revendications 1 à 4, **caractérisé en ce que** le broyage est réalisé en présence de 0 à 15% en poids, par rapport au pigment brut, de solvant organique.

6. Procédé selon au moins l'une quelconque des revendications 1 à 5, **caractérisé en ce que** le broyage est réalisé en présence d'adjuvants du groupe des agents tensioactifs, des dispersants, des charges, des agents thixotropiques, des résines, des cires, des antimousses, des agents antistatiques, des agents antipoussière, des diluants, des colorants pour le nuançage, des conservateurs, des agents retardateurs du séchage, des additifs pour le réglage de la rhéologie, des mouillants, des antioxydants, des réducteurs, des absorbants des UV, des stabilisateurs à la lumière ou d'une combinaison de ceux-ci.

7. Procédé selon au moins l'une quelconque des revendications 1 à 6, **caractérisé en ce qu'**après le broyage, on réalise un post-traitement avec un solvant.
